# EUROPÄISCHE PATENTSCHRIFT

(11) **EP 3 075 593 B1**
(45) Veröffentlichungstag und Bekanntmachung des Hinweises auf die Patenterteilung: **04.01.2023**
(21) Anmeldenummer: 16000668.0
(22) Anmeldetag: 18.03.2016
(51) Int. Cl.: B60L 3/04, H02H 7/08, H02M 7/5387

(54) **VERFAHREN ZUM ENTLADEN EINES ELEKTRISCHEN ENERGIESPEICHERS EINES KRAFTFAHRZEUGS**
METHOD FOR DISCHARGING AN ELECTRICAL ENERGY STORE OF A MOTOR VEHICLE
PROCEDE DE DECHARGEMENT D'UN ACCUMULATEUR D'ENERGIE ELECTRIQUE DE VEHICULE AUTOMOBILE

(30) Priorität: 01.04.2015 DE 102015004309
(43) Veröffentlichungstag der Anmeldung: 05.10.2016
(73) Patentinhaber: MAN Truck & Bus SE, 80995 München (DE)
(72) Erfinder: Pfau, Stefan, 82377 Penzberg (DE)
(74) Vertreter: v. Bezold & Partner Patentanwälte - PartG mbB

(56) Entgegenhaltungen:
- EP-A2- 2 769 868
- WO-A1-2008/138864
- DE-A1- 4 235 138
- JP-A- H0 970 196
- US-A1- 2004 008 530

## Beschreibung

Die Erfindung betrifft ein Verfahren zum Entladen eines Energiespeichers für elektrische Energie, der zur Versorgung einer elektrischen Maschine eines Kraftfahrzeugs vorgesehen ist. Die Erfindung betrifft insbesondere ein derartiges Verfahren, um den elektrischen Energiespeicher auf eine vorgegebene Abstellspannung zu entladen.

In Mildhybrid-, Hybrid- und Elektrofahrzeugen kommen häufig neben einer konventionellen 12 V- oder 24 V-Bleisäurebatterie zusätzliche elektrische Traktionsenergiespeicher zum Einsatz, die zur Versorgung einer elektrischen Maschine im Antriebsstrang vorgesehen sind. Ein derartiger zusätzlicher Energiespeicher ist häufig als Lithium-Ionen-Akkumulator oder als Ultrakondensatorspeicher (kurz auch als Ultracap bezeichnet) ausgeführt. Aufgrund von Versuchsdaten und wissenschaftlichen Untersuchungen ist bekannt, dass beim Einsatz von derartigen Ultrakondensatorspeichern ein Lagern des Energiespeichers mit hohen Ladespannungen, insbesondere im vollständig aufgeladenen Zustand, schädlich für die Lebensdauerhaltbarkeit des Energiespeichers ist.

Demzufolge stellt sich das Problem, wie ein derartiger zusätzlicher Energiespeicher beim Abstellen eines Fahrzeugs und wenn der Ladezustand des Energiespeicher einen für die Lebensdauer optimalen Soll-Abstellschwellenwert überschreitet, geeignet entladen werden kann, um den Ladezustand des Energiespeichers auf eine vorgegebene Abstellspannung abzusenken.

Aus der Praxis ist bekannt, einen zusätzlichen Entladewiderstand vorzusehen, der durch einen Schalter aktiviert wird. Nachteilig hieran ist, dass dies zusätzliche Bauteile erfordert und folglich einen erhöhten Bauraumbedarf und Kosten verursacht, sowie zum Auftreten zusätzlicher Fehlermodi und einer geringeren Verfügbarkeit führen kann.

Eine alternative Möglichkeit wäre die Verwendung ggf. vorhandener Symmetriewiderstände- bzw. -schaltungen, die ausgelegt sind, Unterschiede zwischen den einzelnen Zellen des Energiespeichers langsam auszugleichen. Die übliche thermische Dimensionierung und Leistungsdimensionierung dieser Schaltungen sind jedoch nicht für das Entladen des gesamten Energiespeichers innerhalb eines zweckmäßigen Zeitfensters geeignet. Hierfür müssten diese Schaltungsteile entsprechend erweitert werden, was wiederum Kostensteigerungen nach sich ziehen würde.

Derartige zusätzliche Energiespeicher sind ferner oftmals in einem Teilbordnetz (Inselnetz) mit erhöhter Nennspannung angeordnet, das über einen Gleichspannungswandler (DC/DC-Wandler) mit dem konventionellen Bordnetz gekoppelt ist. Eine weitere Möglichkeit, den zusätzlichen Energiespeicher zu entladen, wäre daher, eine Teilenergie des zusätzlichen Energiespeichers beim Abstellen vom Inselnetz über den Gleichspannungswandler (DC/DC-Wandler) ins konventionelle Bordnetz zu transferieren. Aus der Praxis ist jedoch bekannt, dass die konventionelle 12 V- oder 24 V-Batterie in Mildhybrid-, Hybrid- und Elektrofahrzeugen ebenfalls in der Regel einen hohen Ladezustand aufweist, so dass diese die abzugebende Energie des zusätzlichen Energiespeichers beim Abstellen des Fahrzeugs dann nicht aufnehmen kann, so dass dieser Ansatz keine zuverlässige Entladung ermöglicht. Diese Möglichkeit des Entladens scheidet ferner dann aus, wenn keine energetische Brücke zwischen dem Teilbordnetz und dem konventionellen Bordnetz vorgesehen ist.

Aus der EP 2 769 868 A1 ist ein hybridelektrisches System für ein Fahrzeug bekannt, bei dem eine elektrische Reluktanzmaschine zum Einsatz kommt, wobei zum Entladen eines elektrischen Energiespeichers des Hybridsystems die Phasen der Reluktanzmaschine so bestromt werden, dass keine Fahrzeugbewegung erzeugt wird.

Es ist somit eine Aufgabe der Erfindung, ein verbessertes Verfahren zum Entladen eines Energiespeichers für elektrische Energie, der zur Versorgung einer elektrischen Maschine eines Kraftfahrzeugs vorgesehen ist, bereitzustellen, mit dem Nachteile bekannter Ansätze vermieden werden können. Die Aufgabe der Erfindung ist es insbesondere, ein derartiges Verfahren bereitzustellen, mit dem eine kostengünstige Möglichkeit geschaffen wird, um den elektrischen Energiespeicher sicher auf einen vorgegebenen Abstellzustand zu entladen.

Diese Aufgaben werden durch ein Verfahren mit den Merkmalen des Hauptanspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die Erfindung beruht auf der technischen Erkenntnis, dass eine kostengünstige und variable Möglichkeit zum Entladen eines elektrischen Energiespeichers auf einen vorbestimmten Abstellzustand mittels einer Reluktanzmaschine, insbesondere einer geschalteten Reluktanzmaschine, bereitgestellt werden kann.

Geschaltete Reluktanzmaschinen werden auch mit der Abkürzung SRM bezeichnet, die von der englischen Bezeichnung "switched reluctance motor" abgeleitet ist. Die Reluktanzmaschinen können beispielsweise eine unterschiedliche Anzahl von Zähnen an Rotor und Stator besitzen, wobei Statorzähne mit Magnetspulen umwickelt sind. Im Betrieb der Reluktanzmaschine werden die Magnetspulen abwechselnd so ein- und ausgeschaltet, dass die Zähne am Rotor in Richtung der bestromten Magnetspulen bzw. der Statorzähne bewegt werden. Daraufhin wird in der nächsten Schaltphase dann auf Magnetspulen anderer Statorzähne umgeschaltet, so dass diese den Rotor zur Weiterdrehung veranlassen. Die aufeinanderfolgenden Schaltphasen der verwendeten Magnetspulen sorgen somit insgesamt dafür, dass der Rotor in Rotation versetzt wird.

Im Gegensatz zu Wechselstrommaschinen wird eine geschaltete Reluktanz (SR)-Maschine gewickelt, indem konzentrierte Wicklungen benutzt werden, d. h. Wicklungen, die auf vorstehenden Motorpolen konzentriert sind. Infolgedessen sind die Phasenwicklungen einer SR-Maschine im Wesentlichen frei von jeder magnetischen Kopplung, so dass hohe Ströme in einer Wicklung keine hohen Ströme in benachbarten Phasenwicklungen magnetisch induzieren. Die Erfindung nutzt diese charakteristische magnetische Unabhängigkeit der Phasen von geschalteten Reluktanzmaschinen als Basis für das erfindungsgemäße Entladen des Energiespeichers aus.

Der erfindungsgemäße Ansatz beruht darauf, eine vorhandene Phaseninduktivität, vorzugsweise beim Stillstand der Reluktanzmaschine, als Entladewiderstand zu verwenden, wobei hierzu diejenige(n) Phaseninduktivität(en) ausgewählt wird bzw. werden, deren Rotorposition so ist, dass das resultierende Magnetfeld bei einer Bestromung der Phaseninduktivität keine Kraft entwickelt, die groß genug ist, den Motor, den Triebstrang oder das gesamte Fahrzeug zu bewegen. Somit kann ein Risiko einer ungewollten Beschleunigung vermieden werden.

Gemäß allgemeinen Gesichtspunkten der Erfindung wird somit ein Verfahren zum Entladen eines Energiespeichers für elektrische Energie, der zur Versorgung einer elektrischen Maschine eines Kraftfahrzeugs vorgesehen ist, bereitgestellt, wobei die elektrische Maschine eine geschaltete Reluktanzmaschine ist, deren Phasenwicklungen von einem Wechselrichter, auch als Inverter bezeichnet, mit Hilfe von Schaltern, insbesondere Leistungsschaltern, angesteuert wird. Die Reluktanzmaschine ist vorzugsweise dreiphasig ausgeführt, kann aber auch mehr Phasen haben. Erfindungsgemäß wird nach Erfüllung wenigstens einer Aktivierungsbedingung zur Aktivierung eines Entladevorgangs des Energiespeichers der Entladevorgang aktiviert, bei dem der Energiespeicher über die Reluktanzmaschine auf einen vorbestimmten Abstellzustand entladen wird. Hierbei wird mittels des Wechselrichters wenigstens eine Phasenwicklung als Entladewiderstand bestromt, bei der ein von einem Entladestrom erzeugtes Magnetfeld keine Kraft oder kein Drehmoment entwickelt, die oder das groß genug ist, den Antriebsstrang oder das Kraftfahrzeug zu bewegen.

Das erfindungsgemäße Verfahren ist besonders vorteilhaft, bei Fahrzeugen oder Antriebsstrangkonzepten, bei denen ggf. aus anderen Erwägungen eine Reluktanzmaschine zum Einsatz kommt oder kommen soll. In diesem Fall können eine bereits vorhandene Komponente in Form der Reluktanzmaschine und deren vorhandene Funktionalitäten genutzt werden, um eine Entladefunktionalität kostengünstig bereitzustellen. Der Stromfluss für den Entladevorgang kann durch entsprechende Ansteuerung der (Leistungs-)Schalter des Wechselrichters gesteuert werden.

Ein Energiespeicher für elektrische Energie wird nachfolgend auch als elektrischer Energiespeicher oder kurz Energiespeicher bezeichnet.

Gemäß einer bevorzugten Ausführungsform kann diejenige Phasenwicklung zur Bestromung mit dem Entladestrom ausgewählt werden, bei der der Entladestrom das geringste wirksame Drehmoment erzeugt, so dass eine Bewegung des Rotors bei Bestromung der Phasenwicklung vermieden wird. Das geringste wirksame Drehmoment erzeugt bekanntermaßen diejenige Phasenwicklung der Reluktanzmaschine, bei der sich der Rotor in einer Position mit der kleinsten oder minimalen magnetischen Reluktanz bzw. größten oder maximalen Induktanz befindet. Ist beispielsweise ein Rotorpol exakt mit einem Statorpol ausgerichtet, dann ist die Maschine in der ausgerichteten Position. Wenn Strom in der entsprechenden Statorpolwindung fließt, wird kein Drehmoment erzeugt, weil sich der Rotor in einer Position von maximaler Induktanz und folglich minimaler magnetischer Reluktanz befindet. Diese Phasenwicklung kann aus den verschiedenen Phasenwicklungen mittels eines Motorlagegebers, z. B. eines Rotorlagegebers bestimmt werden. Alternativ kann aber auch eine geberlose Auswahl der Phasenwicklung erfolgen, analog zu an sich bekannten geberlosen Steuerverfahren anhand des Statorstroms oder des Drehmomentes.

Gemäß eines bekannten Verfahrens werden während des Entladens bzw. zum Entladen des Energiespeichers mindestens zwei Phasenwicklungen der Reluktanzmaschine als Entladewiderstände gleichzeitig oder nacheinander bestromt. Da der Verlauf der Kraft, die von dem durch eine bestromte Phasenwicklung erzeugten Magnetfeld erzeugt wird, exponentiell in Abhängigkeit von der Drehposition ist, gibt es z. B. bei einer zumindest dreiphasigen Reluktanzmaschine neben der Phasenwicklung mit minimaler magnetischer Reluktanz immer noch mindestens eine weitere Phasenwicklung, die bestromt werden kann, ohne dass ein Drehmoment erzeugt wird, das den Motor oder das Fahrzeug bewegen kann.

Eine Bestromung von zwei Phaseninduktivitäten zum Entladen des Energiespeichers bietet den Vorteil, dass die beim Entladevorgang entstehende Verlustwärme in den Phaseninduktivitäten, die als Entladewiderstände dienen, auf zwei Phasenstränge verteilt werden kann, so dass eine zu starke Erwärmung der Schalter des Phasenstrangs besser vermieden werden kann.

Gemäß einer weiteren Ausführungsform der Erfindung wird während des Entladens des Energiespeichers die Richtung des Entladestroms durch eine Phasenwicklung umgekehrt. Diese Variante setzt voraus, dass jeder der parallelen Phasenzweige des Wechselrichters zur Ansteuerung jeweils einer Phasenwicklung eine Vollbrückenschaltung aus zwei High-Side-Schaltern und zwei Low-Side-Schaltern umfasst, wobei zu jedem High-Side- und Low-Side-Schalter ein nicht steuerbares Halbleiterschaltelement in Form einer Freilaufdiode antiparallel geschaltet ist. Die Umkehrung der Richtung des Entladestroms durch eine Phasenwicklung während des Entladevorgangs bietet wiederum den Vorteil, dass beim Entladevorgang entstehende Verlustwärme besser in der Elektronik verteilt werden kann, und zwar gemäß dieser Variante auf die einzelnen Schalter des Phasenstrangs.

Falls beispielsweise der gesamte Entladevorgang über nur eine Phasenwicklung in einer Stromrichtung erfolgt, werden nur zwei Bauteile, je nach Stromrichtung der rechte High-Side-Schalter und der linke Low-Side-Schalter oder der linke High-Side-Schalter und der rechte Low-Side-Schalter, thermisch belastet. Wird die Stromrichtung jedoch ein oder mehrmals während des Entladens umgekehrt, kann die thermische Belastung auf alle Schalter des Phasenstrangs verteilt werden. Eine Umkehr der Stromrichtung hat bei der Reluktanzmaschine bekanntermaßen keine Auswirkung auf die Richtung des erzeugten Drehmoments.

Das Umschalten der Stromrichtung innerhalb einer Phasenwicklung und/oder das Wechseln auf eine zweite Phaseninduktivität, wie vorstehend beschrieben, kann vorzugsweise in Abhängigkeit von einer Steuergröße erfolgen, die ein Maß für die durch den Entladestrom entstehende Verlustwärme ist. Beispiele für die Steuergröße könnten die Temperatur der Schalter des Wechselrichters oder eine Dauer und Stärke des Entladestroms sein. Wenn die Steuergröße einen vorbestimmten Schwellenwert überschreitet, kann dann die Stromrichtung und/oder die bestromte Phasenwicklung gewechselt werden.

Selbstverständlich können die parallelen Phasenzweige des Wechselrichters zur Ansteuerung jeweils einer Phasenwicklung auch durch eine erste Reihenschaltung eines High-Side-Schalters mit einer Freilaufdiode und eine zweite Reihenschaltung einer Freilaufdiode mit einem Low-Side-Schalter gebildet sein, d.h. durch zwei asymmetrische Halbbrücken pro Strang gebildet sein. Gemäß dieser Variante ist der Schalttransistor der ersten Reihenschaltung mit dem positiven Pol und der Schalttransistor der zweiten Reihenschaltung mit dem negativen Pol einer Gleichspannungsquelle verbunden. Die Freilaufdioden sind in Bezug auf die Polarität der Gleichspannungsquelle in Sperrrichtung gepolt. Gemäß dieser Variante ist dann eine Umkehr der Stromrichtung beim Entladevorgang nicht möglich.

Ein weiterer Aspekt der Erfindung sieht vor, dass eine erste Aktivierungsbedingung zur Aktivierung eines Entladevorgangs erfüllt ist, wenn eine Ist-Ladespannung des Energiespeichers größer ist als ein vorbestimmter Schwellenwert, der als Soll-Abstellspannung vorgegeben wird, und das Kraftfahrzeug abgestellt wurde. Die Überwachung der Ist-Ladespannung ist üblicherweise eine vorhandene Funktionalität bei Fahrzeugen mit hybridisiertem Antriebsstrang, so dass keine zusätzliche Sensorik benötigt wird. Das Abstellen des Fahrzeugs kann beispielsweise durch das Verriegeln des Fahrzeugs, das Ausschalten der Zündung und/oder durch andere geeignete Parameter erkannt werden, aus denen abgeleitet werden kann, dass der Fahrer das Fahrzeug abgestellt hat und wahrscheinlich ein erneuter Fahrbetrieb nicht unmittelbar bevorsteht. Gemäß dieser Variante wird der vorbestimmte Abstellzustand erreicht, wenn die Ladespannung des Energiespeichers auf den vorbestimmten Schwellenwert (Soll-Abstellspannung) abgesunken ist. Lediglich beispielhaft kann bei einer Zelle eines Ultracaps, die eine maximale Ladespannung von 2,7 V aufweist, eine Soll-Abstellspannung pro Zelle von 2 V vorgeben werden. Bei diesem Aspekt der Erfindung wird somit beim Abstellen des Fahrzeugs geprüft, ob der Energiespeicher entladen werden muss, und dadurch vermieden, dass der Energiespeicher ungenutzt in einem Zustand zu hoher Ladespannung lagert und die Lebensdauerhaltbarkeit dadurch beeinträchtigt wird.

Gemäß einer weiteren Ausführungsvariante kann eine zweite Aktivierungsbedingung zur Aktivierung eines Entladevorgangs vorgegeben werden, die dann erfüllt ist, wenn ein Fehlerfall im Energiespeicher, z. B. ein Ausfall einer Zelle des Energiespeichers, diagnostiziert wird oder ein Durchführen von Service- oder Wartungsarbeiten angezeigt wird, wobei der vorbestimmte Abstellzustand erreicht ist, wenn der Energiespeicher vollständig entladen wurde. Gemäß dieser Variante kann aus Sicherheitsgründen ein Entladevorgang eingeleitet werden, um im Fehlerfall einen unsicheren Fahrbetrieb oder weitere Beschädigungen zu vermeiden oder um bei Service- oder Wartungsarbeiten den Service-Arbeiter keinem Risiko einer hohen Spannung auszusetzen. Ein Fehlerfall im Energiespeicher kann anhand der an sich bekannten Fehlerdiagnostikfunktionalität ermittelt werden, die üblicherweise bei herkömmlichen Traktionsenergiespeichern eingesetzt werden. Das Anzeigen von Service- oder Wartungsarbeiten kann beispielsweise durch Nutzung der On-Board-Diagnostik-Schnittstelle, durch Betätigung eines Entladeknopfs oder eine Entladeaufforderung des Energiespeichers angezeigt werden.

Bei einer vorteilhaften Variante der beiden vorgenannten Beispiele von Aktivierungsbedingungen wird der Entladestrom bei Erfüllung der ersten Aktivierungsbedingung mittels einer Steuereinheit des Wechselrichters auf eine erste Größe und bei Erfüllung der zweiten Aktivierungsbedingung auf eine zweite Größe eingestellt, wobei die erste Größe kleiner als die zweite Größe ist. Mit anderen Worten wird bei einem aus Sicherheitsgründen getriggerten Entladevorgang eine schnellere Entladung des Energiespeichers veranlasst.

Dies verdeutlicht einen weiteren Vorteil des erfindungsgemäßen Ansatzes. Mittels der Steuereinheit des Wechselrichters kann die Stromstärke des Stromflusses durch die Phasenwicklung durch entsprechende Ansteuerung der Halbleiterschalter der Phasenstränge des Wechselrichters gesteuert werden. Somit kann mit einer bestehenden Anordnung aus Wechselrichter und Reluktanzmaschine auch die Größe des Entladestroms für den Entladevorgang gesteuert und variiert werden, um je nach Aktivierungsbedingung oder Zweck des Entladevorgangs die Geschwindigkeit des Entladevorgangs anzupassen. Mit einem herkömmlichen passiven Entladewiderstand wäre dies nicht möglich.

Vorzugsweise findet der Entladevorgang im Stillstand des Fahrzeugs und/oder bei abgestelltem Fahrzeug statt, d. h. bei einem Zustand, wo sich der Rotor der Reluktanzmaschine nicht dreht. Gemäß einer bekannten Variante des Verfahrens wird dies jedoch bei einem Fahrbetrieb des Fahrzeugs durchgeführt. Hierbei kann der Entladevorgang während des Betriebs der Reluktanzmaschine aktiviert werden, z. B. im Fall eines sicherheitskritischen Fehlerfalls. In diesem Fall ist die Steuereinheit des Wechselrichters gemäß dieser Variante eingerichtet, einen gepulsten Entladevorgang auszuführen, bei dem die Phasenwicklungen der Reluktanzmaschine nacheinander gepulst bestromt werden, wobei jeweils diejenige Phasenwicklung mit einem Entladestrom des Energiespeichers bestromt wird, die aktuell das kleinste Drehmoment erzeugt. Hierbei wird beispielsweise jeweils diejenige Phasenwicklung durch Kurzschließen des High-Side-Schalters und Low-Side-Schalters des zugeordneten Phasenzweigs bestromt, die im bestromten Zustand das kleinste Drehmoment erzeugt bzw. bei der sich der Rotor in einer Position mit minimaler magnetischer Reluktanz befindet.

Wahlweise ist es auch möglich, durch ein zeitgleiches geeignetes Bestromen aller Motorphasen ein Summendrehmoment von 0 zu erzeugen und den Energiespeicher zu entladen. Dies ist möglich, weil die einzelnen Phasen der Maschine nicht elektrisch oder magnetisch miteinander verbunden sind.

Die Schalter des Wechselrichters sind vorzugsweise als Halbleiterschalter, weiter vorzugsweise als Leistungs-MOSFETS ausgebildet. Die Reluktanzmaschine kann als Startergenerator ausgeführt sein. Der Energiespeicher für elektrische Energie kann ein Lithium-Ionen-Speicher oder ein Kondensatorspeicher, insbesondere ein Ultra-Cap-Speicher, sein. Ferner kann das Kraftfahrzeug ein als Mildhybrid-, Hybrid- oder Elektrofahrzeug ausgeführtes Kraftfahrzeug, insbesondere ein derartiges Nutzfahrzeug sein.

Die Erfindung betrifft ferner ein Kraftfahrzeug, insbesondere ein Nutzfahrzeug, mit einer Steuervorrichtung, insbesondere eine Steuereinheit für den Wechselrichter der Reluktanzmaschine, die eingerichtet ist, das erfindungsgemäße Verfahren auszuführen.

Die zuvor beschriebenen bevorzugten Ausführungsformen und Merkmale der Erfindung sind beliebig miteinander kombinierbar. Zur Vermeidung von Wiederholungen sollen ferner rein verfahrensgemäß offenbarte Merkmale auch als vorrichtungsgemäß offenbart gelten und beanspruchbar sein. Weitere Einzelheiten und Vorteile der Erfindung werden im Folgenden unter Bezug auf die beigefügten Zeichnungen beschrieben. Es zeigen:
- Figur 1: ein schematisches Blockschaltbild eines Teilbordnetzes mit einem elektrischen Energiespeicher, einem Inverter und einer Reluktanzmaschine gemäß einer Ausführungsform der Erfindung;
- Figur 2: ein schematisches Blockschaltbild des Teilbordnetzes und einen schematischen Aufbau des Wechselrichters gemäß einer Ausführungsform der Erfindung;
- Figur 3: ein Ablaufdiagramm eines Verfahrens zum Entladen des Energiespeichers auf einen Abstellzustand gemäß einer Ausführungsform der Erfindung; und
- Figur 4: einen Entladestrom anhand des Blockschaltbilds der Figur 2.

Gleiche oder äquivalente Komponenten sind in allen Figuren mit den gleichen Bezugszeichen bezeichnet.

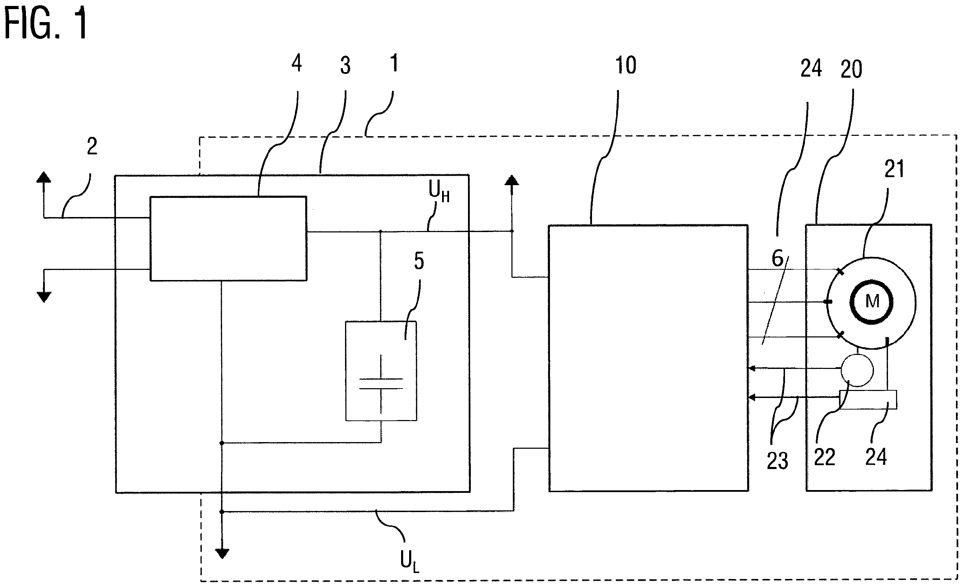

Figur 1 zeigt in Form eines schematischen Blockschaltbildes eine Anordnung von Komponenten eines hybridisierten Antriebsstrangs in einem Teilbordnetz 1 eines Kraftfahrzeugs, insbesondere eines Nutzfahrzeugs.

Das Teilbordnetz 1 ist in an sich bekannter Weise über einen DC/DC-Wandler 4 mit einem konventionellen Bordnetz 2 verbunden, in dem sich verschiedene Verbraucher und eine konventionelle Batterie befinden. Das Teilbordnetz 1 kann beispielsweise mit einer erhöhten Niedervoltspannung im Vergleich zum Hauptbordnetz 2 betrieben werden. Im Teilbordnetz 1 sind ein elektrischer Energiespeicher 5 in Form eines Ultracap-Speichers sowie ein Wechselrichter (Inverter) 10 und eine geschaltete Reluktanzmaschine 20 angeordnet. Der mit dem Bezugszeichen 3 gekennzeichnete Kasten soll kein weiteres Bauteil, sondern lediglich die Gesamtanordnung aus Gleichspannungswandler 4 und Energiespeicher 5 kennzeichnen.

Die Reluktanzmaschine 20 dient als Startergenerator und kann sowohl motorisch als auch generatorisch betrieben werden. Im motorischen Betrieb wird die Reluktanzmaschine über den Wechselrichter 10 mit Energie vom Energiespeicher 5 versorgt. Im generatorischen Betrieb kann die von der Reluktanzmaschine erzeugte elektrische Energie vom Energiespeicher 5 gespeichert werden. Die Reluktanzmaschine 20 ist im Ausführungsbeispiel als dreiphasiger Reluktanzmotor 21 ausgeführt. Jede Phasenwicklung U, V, W des Reluktanzmotors 21 ist mit ihrem positiven und negativen Anschluss 24 nach außen geführt und an den Inverter 10 angeschlossen. Die Reluktanzmaschine 20 umfasst ferner einen Rotorlagegeber 22 und einen Temperatursensor 24. Die Messwerte des Rotorlagegebers 22 und des Temperatursensors 24 werden über Signalleitungen 23 an den Wechselrichter 10 übertragen. U_{H} und U_{L} bezeichnen die beiden Potentiale der anliegenden Gleichspannung.

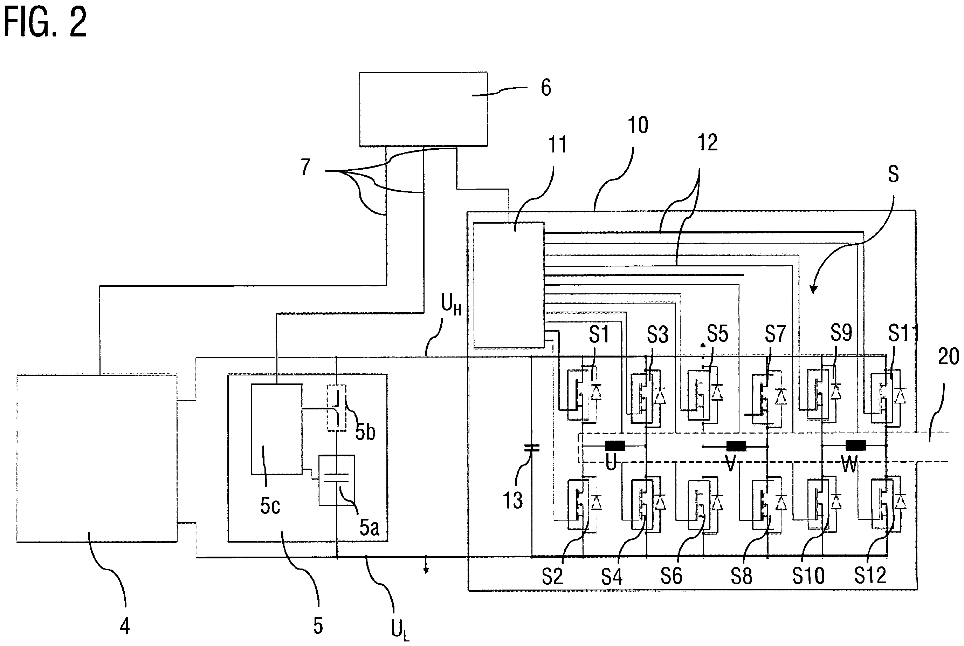

In Figur 2 ist der Aufbau des Wechselrichters 10 und des Energiespeichers 5 dargestellt. Der Supercap-Speicher 5 umfasst in an sich bekannter Weise eine Steuereinheit 5c mit einer Leistungselektronik, die die Energieflüsse in und aus dem Supercap-Speicherzellenmodul 5a regelt. Das Supercap-Speicherzellenmodul kann über einen optionalen Schalter 5b vom Teilbordnetz 1 abgetrennt werden.

Der Wechselrichter 10 bestimmt Leistung und Betriebsart der Reluktanzmaschine 20 und wird von einer Fahrzeugsteuerung 6 entsprechend der Leistungsanforderung an die Reluktanzmaschine 20 angesteuert. Die Fahrzeugsteuerung 6 ist über eine Steuerleitung 7 mit einem Mikrocontroller 11 des Wechselrichters verbunden und ferner über weitere Steuerleitungen 7 mit dem Gleichspannungswandler 4 und der Steuereinheit 5c des Energiespeichers 5.

Der Mikrocontroller 11 des Wechselrichters steuert die drei Phasenwicklungen U, V, und W der Reluktanzmaschine mit Hilfe von steuerbaren Halbleiterschaltern S in Form von Leistungsschaltern an. Zu diesem Zweck weist die in Figur 2 dargestellte Ausführungsform des Wechselrichters 10 zwölf Schalter S (S1 bis S12) auf. Ein Zwischenkreiskondensator 13 dient als Entstörkapazität und ist an die Betriebsspannung zwischen U_{H} und U_{L} angeschlossen. Alternativ zur dargestellten Ausführungsform kann der Zwischenkreiskondensator 13 selbstverständlich auch außerhalb des Wechselrichters 10 angeordnet sein.

Jeder der parallelen drei Phasenzweige des Wechselrichters 10 zur Ansteuerung jeweils einer Phasenwicklung U, V, oder W umfasst zwei High-Side-Schalter S1 und S3 bzw. S5 und S7 bzw. S9 und S11 und zwei Low-Side-Schalter S2 und S4 bzw. S6 und S8 bzw. S10 und S12. Zu jedem High-Side- und Low-Side-Schalter ist ein nicht steuerbares Halbleiterschaltelement in Form einer Freilaufdiode 14 antiparallel geschaltet. Die Schalter S1 bis S12 sind als Leistungs-MOSFETs ausgebildet und werden von dem Mikrocontroller 11 jeweils über die Steuerleitungen 12 an ihrem Gate, welches den Steuereingang darstellt, gesteuert. Zur normalen Bestromung der Phasenwicklung U schaltet der Mikrocontroller 11 die Halbleiterschalter S1 und S4 auf Durchgang, so dass ein Strom durch die Phasenwicklung U fließt. Werden die Halbleiterschalter S1 und S4 von dem Mikrocontroller 11 danach wieder abgeschaltet, fließt ein Entladestrom der Phasenwicklung (nicht der des Energiespeichers) über die Freilaufdioden 14 der Schalter S2 und S3. Eine Bestromung der Phasenwicklung U in umgekehrter Richtung ist ebenfalls möglich. Hierzu werden die Halbleiterschalter S3 und S2 auf Durchgang geschaltet. Der Entladestrom der Phasenwicklung (nicht der des Energiespeichers) fließt dann über die Freilaufdioden 14 der Schalter S1 und S4.

Die Bestromung der Phasenwicklungen V und W erfolgt analog über die jeweiligen Schalter der zugeordneten Phasenzweige. Die elektrische Maschine 20 ist im dargestellten Ausführungsbeispiel dreiphasig ausgeführt, kann aber auch mehr als drei Phasen aufweisen, wobei für jede Phase jeweils die Phasenstränge, wie vorstehend beschrieben, in dem Wechselrichter 10 vorzusehen sind.

Wie vorstehend bereits erwähnt wurde, können die parallelen Phasenzweige des Wechselrichters 10 zur Ansteuerung jeweils einer Phasenwicklung U, V und W auch durch eine erste Reihenschaltung eines High-Side-Schalters mit einer Freilaufdiode und eine zweite Reihenschaltung einer Freilaufdiode mit einem Low-Side-Schalter gebildet sein, d. h. durch zwei asymmetrische Halbbrücken pro Strang gebildet sein. Gemäß dieser Variante ist dann eine Umkehr der Stromrichtung beim Entladevorgang nicht möglich.

Die Ausbildung der Phasenzweige des Wechselrichters 10 der vorstehend beschriebenen Art ist an sich bekannt.

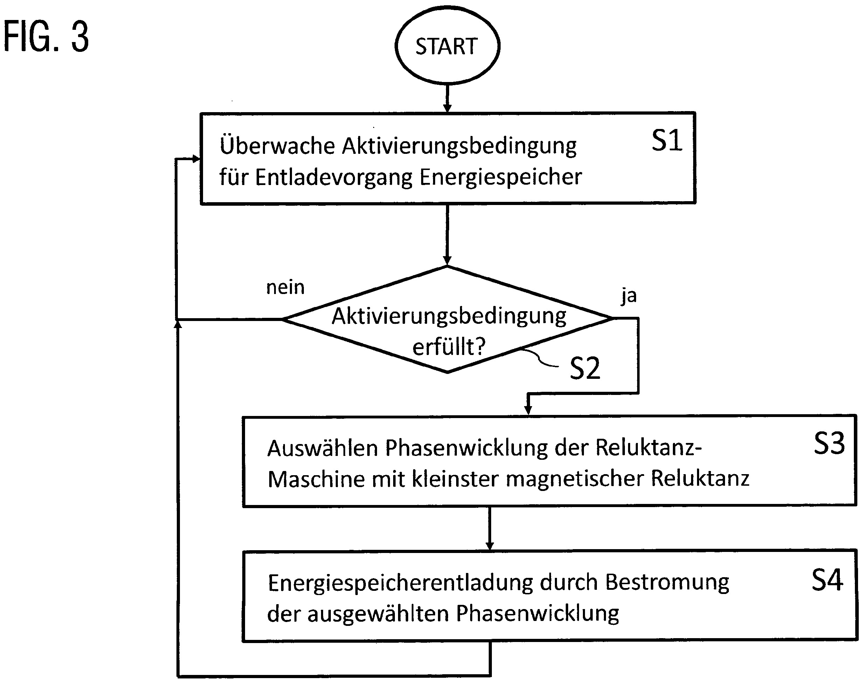

Nachfolgend wird anhand von Figur 3 ein Ablaufdiagramm eines Verfahrens zum Entladen des Energiespeichers auf einen Abstellzustand gemäß einer Ausführungsform der Erfindung beschrieben.

In Schritt S1 werden fortlaufend die vorgegebenen Aktivierungsbedingungen für einen Entladevorgang des Ultracap-Speichers 5 überwacht und deren Erfüllung geprüft (Schritt S2).

Vorliegend sind beispielsweise zwei unterschiedliche Aktivierungsbedingungen zur Aktivierung des Entladevorgangs vorgegeben, so dass in zwei voneinander unabhängigen Fällen ein Entladevorgang ausgelöst werden kann.

Eine erste Aktivierungsbedingung stellt sicher, dass der Ultracap-Speicher 5 automatisch auf eine vorgegebene Abstellspannung entladen wird, falls das Fahrzeug abgestellt wird und falls dann eine Ist-Ladespannung des Energiespeichers größer als die vorgegebene Soll-Abstellspannung ist.

Die Fahrzeugsteuerung 6 prüft somit, ob das Fahrzeug abgestellt wurde, d. h., durch Auswertung geeigneter Parameter wird geprüft, ob der Fahrer das Fahrzeug abgestellt hat und wahrscheinlich ein erneuter Fahrbetrieb nicht unmittelbar bevorsteht. Dies kann z. B. anhand einer Verriegelung des Fahrzeugs erkannt werden. Falls ein Abstellen erkannt wurde, prüft die Fahrzeugsteuerung 6 ferner, ob die Ist-Ladespannung des Ultracap-Speichers 5 größer als die Soll-Abstellspannung ist. Lediglich beispielhaft kann der Ultracap-Speicher 5 ein Speichermodul aus 20 Zellen mit je 2,7 V maximaler Ladespannung aufweisen. Im abgestellten Zustand sollen die Zellen jedoch maximal mit 2 V geladen sein, um die Lebensdauerhaltbarkeit zu verbessern. Die aktuelle Ladespannung des Ultracap-Speichers 5 wird fortlaufend von der Steuereinheit 5c an die Fahrzeugsteuerung 6 übermittelt und kann dann mit der Soll-Abstellspannung verglichen werden.

Die erste Aktivierungsbedingung ist erfüllt, wenn die Ist-Ladespannung des abgestellten Fahrzeugs über der Soll-Abstellspannung liegt, so dass in diesem Fall in Schritt S3 eine der Phasenwicklungen U, V oder W ausgewählt wird, die für den Entladevorgang bestromt wird.

Hierbei wird mittels des Rotorlagegebers 22 diejenige Phasenwicklung ermittelt, bei der sich der Rotor in einer Position mit der kleinsten oder minimalen magnetischen Reluktanz bzw. größten oder maximalen Induktanz befindet. Diese Phasenwicklung erzeugt bei Bestromung mit dem Entladestrom das geringste wirksame Drehmoment, so dass eine Bewegung des Rotors bei Bestromung der Phasenwicklung vermieden wird und diese Phasenwicklung bzw. Induktivität als Entladewiderstand genutzt werden kann, ohne dass die Reluktanzmaschine eine wirksames Drehmoment erzeugt.

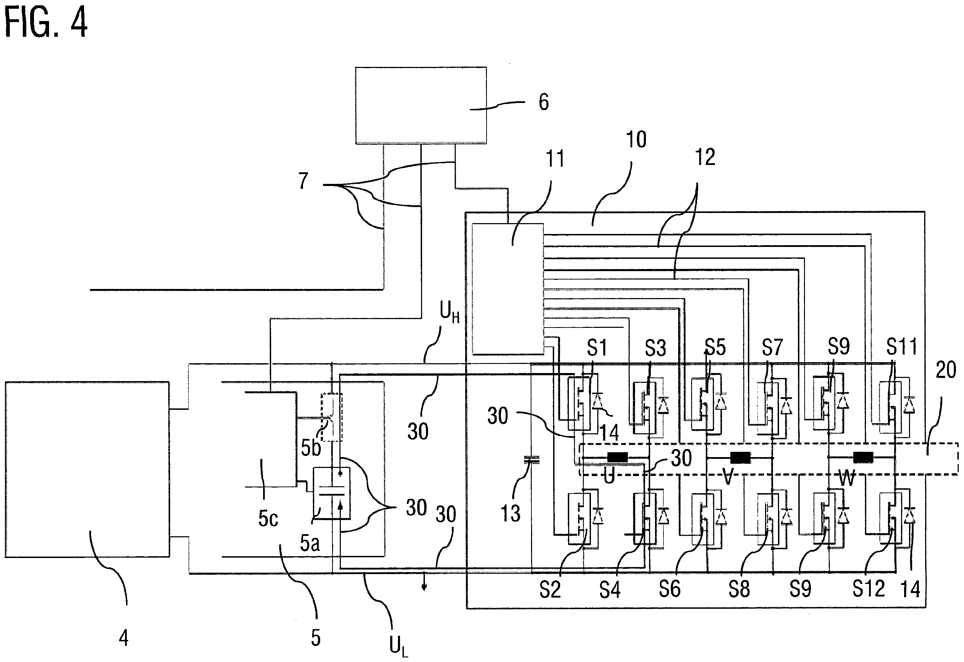

Anschließend wird in Schritt S4 die ermittelte Phasenwicklung als Entladewiderstand für den Entladestrom genutzt. Wurde beispielsweise in Schritt S3 die Phase U ermittelt, schaltet der Mikrocontroller 11 die Halbleiterschalter S1 und S4 auf Durchgang, so dass ein Entladestrom durch die Phasenwicklung U fließt, was in Figur 4 durch die Linie 30, die den Entladestrom zeigt, dargestellt ist. Ein Entladestrom könnte auch in umgekehrter Richtung durch die Phasenwicklung U fließen. Hierzu müssen dann die Halbleiterschalter S3 und S2 auf Durchgang geschaltet werden. Im Unterschied zum normalen Betrieb der Reluktanzmaschine erzeugt die Bestromung kein Drehmoment und keine Bewegung der Maschine.

Der Entladevorgang wird beendet, wenn die Ist-Ladespannung auf die Soll-Abstellspannung gesunken ist.

Der Entladevorgang kann auch bei Erfüllung einer zweiten Aktivierungsbedingung gestartet werden. Diese zweite Aktivierungsbedingungen leitet eine vollständige Entladung des Energiespeichers ein, falls ein Fehlerfall im Energiespeicher, z. B. ein Ausfall einer Zelle des Energiespeicher, diagnostiziert wird oder ein Durchführen von Service- oder Wartungsarbeiten angezeigt wird, wie vorstehend bereits beschrieben wurde. Der Entladevorgang erfolgt wiederum analog gemäß der Schritte S3 und S4.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Teilbordnetz
- 2: Hauptbordnetz
- 3: Kombination aus Gleichspannungswandler und Energiespeicher
- 4: Gleichspannungswandler
- 5: Energiespeicher
- 5a: Ultracap-Speicherzellenmodul
- 5b: Trennschalter
- 5c: Steuereinheit
- 6: Fahrzeugsteuerung
- 7: Steuerleitung
- 10: Wechselrichter
- 11: Mikrocontroller
- 12: Steuerleitung
- 13: Zwischenkreiskondensator
- 14: Freilaufdiode
- 20: Reluktanzmaschine
- 21: Reluktanzmotor
- 22: Rotorlagegeber
- 23: Signalleitung
- 24: Temperatursensor
- 30: Entladestrom
- S: Halbleiterschalter
- U, V, W: Phasenwicklung

## Patentansprüche

1. Verfahren zum Entladen eines Energiespeichers (5) für elektrische Energie, der zur Versorgung einer elektrischen Maschine eines Kraftfahrzeugs vorgesehen ist, wobei die elektrische Maschine eine geschaltete Reluktanzmaschine (20) ist, deren Phasenwicklungen (U, V, W) von einem Wechselrichter (10) mit Hilfe von Schaltern (S) angesteuert wird, wobei nach Erfüllung wenigstens einer Aktivierungsbedingung (S2) zur Aktivierung eines Entladevorgangs des Energiespeichers der Entladevorgang aktiviert wird, bei dem der Energiespeicher (5) über die Reluktanzmaschine (20) auf einen vorbestimmten Abstellzustand entladen wird, wobei mittels des Wechselrichters (10) wenigstens eine Phasenwicklung als Entladewiderstand bestromt wird, bei der ein von einem Entladestrom erzeugtes Magnetfeld keine Kraft oder kein Drehmoment entwickelt, die oder das groß genug ist, den Antriebsstrang oder das Kraftfahrzeug zu bewegen (S3, S4), **dadurch gekennzeichnet, dass** mittels eines Motorlagegebers (22) diejenige Phasenwicklung zur Bestromung mit dem Entladestrom ausgewählt wird, bei der der Entladestrom das geringste wirksame Drehmoment erzeugt.

2. Verfahren nach Anspruch 1, **dadurch gekennzeichnet,**
a) **dass** jeder der parallelen Phasenzweige des Wechselrichters zur Ansteuerung jeweils einer Phasenwicklung (U, V, W) zwei High-Side-Schalter (S1, S3; S5, S7; S9, S11) und zwei Low-Side-Schalter (S2, S4; S6, S8; S10, S12) umfasst, wobei zu jedem High-Side- und Low-Side-Schalter ein nicht steuerbares Halbleiterschaltelement in Form einer Freilaufdiode (14) antiparallel geschaltet ist; und
b) **dass** während des Entladens des Energiespeichers (5) die Richtung des Entladestroms durch eine Phasenwicklung umgekehrt wird.

3. Verfahren nach einem der vorhergehenden Ansprüche, **dadurch gekennzeichnet, dass** eine erste Aktivierungsbedingung zur Aktivierung eines Entladevorgangs erfüllt ist, wenn eine Ist-Ladespannung des Energiespeichers größer als ein vorbestimmter Schwellenwert ist und das Kraftfahrzeug abgestellt wurde, wobei der vorbestimmte Abstellzustand erreicht ist, wenn die Ladespannung des Energiespeichers auf den vorbestimmten Schwellenwert abgesunken ist.

4. Verfahren nach einem der vorhergehenden Ansprüche, **dadurch gekennzeichnet, dass** eine zweite Aktivierungsbedingung zur Aktivierung eines Entladevorgangs erfüllt ist, wenn ein Fehlerfall im Energiespeicher (5) diagnostiziert wird oder ein Durchführen von Service- oder Wartungsarbeiten angezeigt wird, wobei der vorbestimmte Abstellzustand erreicht ist, wenn der Energiespeichers (5) vollständig entladen wurde.

5. Verfahren nach Anspruch 4, wenn abhängig von Anspruch 3, **dadurch gekennzeichnet, dass** der Entladestrom bei Erfüllung der ersten Aktivierungsbedingung mittels einer Steuereinheit (11) des Wechselrichters (10) auf eine erste Größe und bei Erfüllung der zweiten Aktivierungsbedingung auf eine zweite Größe eingestellt wird, wobei die erste Größe kleiner als die zweite Größe ist.

6. Verfahren nach einem der vorhergehenden Ansprüche, **dadurch gekennzeichnet,**
a) **dass** die Schalter (S) als Halbleiterschalter, vorzugsweise als Leistungs-MOSFETS ausgebildet sind;
b) **dass** die Reluktanzmaschine (20) als Startergenerator ausgeführt ist;
c) **dass** der Energiespeicher (5) für elektrische Energie ein Lithium-Ionen-Speicher oder ein Kondensatorspeicher, insbesondere ein Ultra-Cap-Speicher ist; und/oder
d) **dass** das Kraftfahrzeug ein als Mildhybrid-, Hybrid- oder Elektrofahrzeug ausgeführtes Nutzfahrzeug ist.

## Claims

1. A method for discharging an energy store (5) for electrical energy, which is provided to supply an electric machine of a motor vehicle, wherein the electric machine is a switched reluctance machine (20), the phase windings (U, V, W) of which are controlled by an inverter (10) using switches (S), wherein the discharge process is activated after at least one activation condition (S2) for activating a discharge process of the energy store has been satisfied, in which discharge process the energy store (5) is discharged to a predetermined parked state by means of the reluctance machine (20), wherein at least one phase winding is energized as discharge resistance by means of the inverter (10), in which phase winding a magnetic field generated by a discharge current does not produce a force or torque that is great enough to move the drive train or the motor vehicle (S3, S4), **characterized in that** the phase winding in which the discharge current produces the lowest effective torque is selected to energize using the discharge current by means of a motor position encoder (22).

2. The method according to claim 1, **characterized in that**
a) each of the parallel phase branches of the inverter comprises two high-side switches (S1, S3; S5, S7; S9, S11) and two low-side switches (S2, S4; S6, S8; S10, S12) for controlling a respective phase winding (U, V, W), wherein a non-controllable semiconductor switching element in the form of a freewheeling diode (14) is connected in antiparallel with each high-side and low-side switch; and
b) the direction of the discharge current through a phase winding is reversed during the discharge of the energy store (5).

3. The method according to any one of the preceding claims, **characterized in that** a first activation condition for activating a discharge process is satisfied when an actual charging voltage of the energy store is greater than a predetermined threshold value and the motor vehicle has been parked, wherein the predetermined parked state is achieved when the charging voltage of the energy store has fallen to the predetermined threshold value.

4. The method according to any one of the preceding claims, **characterized in that** a second activation condition for activating a discharge process is satisfied when a fault in the energy store (5) is diagnosed or performance of service or maintenance work is indicated, wherein the predetermined parked state is achieved when the energy store (5) has been fully discharged.

5. The method according to Claim 4, when dependent on Claim 3, **characterized in that** the discharge current is set to a first variable by means of a control unit (11) of the inverter (10) when the first activation condition has been satisfied and to a second variable when the second activation condition has been satisfied, wherein the first variable is lower than the second variable.

6. The method according to any one of the preceding claims, **characterized in that**
a) the switches (S) are formed as semiconductor switches, preferably as power MOSFETs;
b) the reluctance machine (20) is embodied as a starter generator;
c) the energy store (5) for electrical energy is a lithium-ion store or a capacitor store, in particular an ultra-cap store; and/or
d) the motor vehicle is a commercial vehicle embodied as a mild hybrid, hybrid, or electric vehicle.

## Revendications

1. Procédé permettant de décharger un accumulateur d'énergie (5) destiné à l'énergie électrique qui est prévu pour alimenter une machine électrique d'un véhicule automobile, la machine électrique étant une machine à reluctance couplée (20) dont les enroulements de phase (U, V, W) sont excités par un onduleur (10) à l'aide de commutateurs (S), dans lequel, après qu'au moins une condition d'activation (S2) pour activer un processus de décharge de l'accumulateur d'énergie est satisfaite, le processus de décharge est activé pendant lequel l'accumulateur d'énergie (5) est déchargé par l'intermédiaire de la machine à reluctance (20) jusqu'à un état d'arrêt prédéterminé, au moins un enroulement de phase en tant que résistance de décharge étant alimenté en courant au moyen de l'onduleur (10), enroulement dans lequel un champ magnétique généré ne développe aucune force ni aucun couple suffisamment élevé (e) pour déplacer la chaîne cinématique ou le véhicule automobile (S3, S4),
**caractérisé en ce qu'**un codeur de position de moteur (22) permet de sélectionner l'enroulement de phase servant à l'alimentation en courant par le courant de décharge pour lequel le courant de décharge génère le plus petit couple effectif.

2. Procédé selon la revendication 1, **caractérisé en ce que**
a) chacune des branches de phase parallèles de l'onduleur comprend pour l'excitation respectivement d'un enroulement de phase (U, V, W) deux commutateurs haute tension (S1, S3; S5, S7; S9, S11) et deux commutateurs basse tension (S2, S4; S6, S8; S10, S12), un élément de commutation à semi-conducteur ne pouvant pas être commandé, sous la forme d'une diode de roue libre (14), étant connecté de manière antiparallèle à chaque commutateur haute tension et à chaque commutateur basse tension; et
b) pendant la décharge de l'accumulateur d'énergie (5), le sens du courant de décharge est inversé par un enroulement de phase.

3. Procédé selon l'une quelconque des revendications précédentes, **caractérisé en ce qu'**une première condition d'activation pour activer un processus de décharge est satisfaite si une tension de charge réelle de l'accumulateur d'énergie est supérieure à une valeur seuil prédéterminée et le véhicule automobile a été arrêté, l'état d'arrêt prédéterminé étant atteint si la tension de charge de l'accumulateur d'énergie est descendu jusqu'à la valeur seuil prédéterminée.

4. Procédé selon l'une quelconque des revendications précédentes, **caractérisé en ce qu'**une deuxième condition d'activation d'un processus de décharge est satisfaite si un cas de défaillance est diagnostiqué dans l'accumulateur d'énergie (5) ou l'exécution d'interventions d'entretien ou de maintenance est affichée, l'état d'arrêt prédéterminé étant atteint si l'accumulateur d'énergie (5) a été complètement déchargé.

5. Procédé selon la revendication 4 lorsqu'elle dépend de la revendication 3, **caractérisé en ce que** le courant de décharge, lorsque la première condition d'activation est satisfaite, est réglé au moyen d'une unité de commande (11) de l'onduleur (10) sur une première grandeur, et lorsque la deuxième condition d'activation est satisfaite, sur une deuxième grandeur, la première grandeur étant inférieure à la deuxième grandeur.

6. Procédé selon l'une quelconque des revendications précédentes, **caractérisé en ce que**
a) les commutateurs (S) sont réalisés sous la forme de commutateurs à semi-conducteur, de préférence sous la forme de MOSFET de puissance;
b) la machine à reluctance (20) est réalisée sous la forme d'un générateur de démarrage;
c) l'accumulateur d'énergie (5) destiné à l'énergie électrique est un accumulateur lithium-ions ou un accumulateur à condensateur, en particulier un accumulateur à supercondensateur; et/ou
d) le véhicule automobile est un véhicule utilitaire réalisé sous forme de véhicule hybride léger, de véhicule hybride ou de véhicule électrique.
